# EUROPÄISCHE PATENTANMELDUNG

(11) **EP 3 772 388 A1**
(43) Veröffentlichungstag der Anmeldung: **10.02.2021**
(21) Anmeldenummer: 19190196.6
(22) Anmeldetag: 06.08.2019
(51) Int. Cl.: B23K 9/067, B23K 9/073, B23K 9/095, B23K 9/06, B23K 9/09

(54) **VERFAHREN ZUM ZÜNDEN EINES SCHWEISSLICHTBOGENS**

(71) Anmelder: Fronius International GmbH, 4643 Pettenbach (AT)
(72) Erfinder: Söllinger, Dominik, 4643 Pettenbach (AT)
(74) Vertreter: Isarpatent

(57) **Zusammenfassung**

Verfahren und Vorrichtung zum Zünden und/oder Wiederzünden eines Schweißlichtbogens (SLB) zwischen einem Drahtende einer abschmelzbaren Schweißdrahtelektrode (SDE) und einem Werkstück (W) mit den Schritten: Ermitteln (S1) einer Wegstrecke (S) oder Zeitdauer, welche das Drahtende der abschmelzbaren Schweißdrahtelektrode, SDE, bis zum Kontakt oder Kurzschluss mit einer Oberfläche des Werkstückes (W) benötigt; und Zünden (S2) des Schweißlichtbogens (SLB) mit einer Zündenergie, E_{z}, welche in Abhängigkeit von der ermittelten Wegstrecke (S) oder Zeitdauer eingestellt wird.

## Beschreibung

Die Erfindung betrifft ein Verfahren und eine Vorrichtung zum Zünden und/oder Wiederzünden eines Schweißlichtbogens zwischen einem Drahtende einer abschmelzbaren Schweißdrahtelektrode und einem Werkstück.

Bei Lichtbogenschweißen brennt ein Schweißlichtbogen zwischen einem Werkstück und einer Schweißdrahtelektrode, die dabei abschmilzt und somit gleichzeitig als Zusatzwerkstoff dient. Zwischen dem Werkstück und der Schweißdrahtelektrode brennt der Schweißlichtbogen, der Temperaturen von mehr als 4000 K erreicht. Da der Schweißlichtbogen auf eine sehr kleine Fläche des Werkstückes einwirkt, ist die Leistungsdichte beim Lichtbogenschweißen relativ hoch, sodass eine hohe Schweißgeschwindigkeit ermöglicht wird. Die Zündung des Schweißlichtbogens erfolgt durch eine sog. Kontaktzündung, wobei die Schweißdrahtelektrode das Werkstück berührt. Dabei fließt aufgrund des Kurzschlusses ein hoher elektrischer Strom, der die Schweißdrahtelektrode an ihrer Spitze bzw. an ihrem Schweißdrahtende zum Schmelzen bringt und den Schweißlichtbogen zündet.

Während des Zündvorganges kann es allerdings dazu kommen, dass das Schweißdrahtende der Schweißdrahtelektrode bei Kontakt mit der Oberfläche des Werkzeugs dort verschweißt bleibt, so dass ein Zünden des Schweißlichtbogens verhindert wird. Weiterhin kann der Schweißlichtbogen zwischen dem Schweißdrahtende und der Oberfläche des Werkstückes während des Schweißprozesses abreißen, sodass ein erneutes Zünden des Schweißlichtbogens erforderlich ist. Bei herkömmlichen Schweißlichtbogenverfahren wird der thermische Zustand des Drahtendes der Schweißdrahtelektrode nicht berücksichtigt. Demzufolge wird bei herkömmlichen Schweißlichtbogenverfahren das freie Schweißdrahtende der Schweißdrahtelektrode nicht mit einer passenden Zündenergie beaufschlagt, sodass es während der Wiederzündung zu Lichtbogenabrissen oder zu Schweißstartfehlern kommen kann.

Es ist daher eine Aufgabe der vorliegenden Erfindung ein Verfahren und eine Vorrichtung zum Zünden oder Wiederzünden eines Schweißlichtbogens zwischen einem Drahtende einer abschmelzbaren Schweißdrahtelektrode und einem Werkstück zu schaffen, das Schweißstartfehler verhindert und den Schweißlichtbogen während des Schweißvorganges zuverlässig zündet bzw. wiederzündet. Diese Aufgabe wird erfindungsgemäß durch ein Verfahren mit den in Patentanspruch 1 angegebenen Merkmalen gelöst.

Die Erfindung schafft demnach ein Verfahren zum Zünden und/oder Wiederzünden eines Schweißlichtbogens zwischen einem Drahtende einer abschmelzbaren Schweißdrahtelektrode und einem Werkstück mit den Schritten:
Ermitteln einer Wegstrecke oder Zeitdauer, welche das freie Drahtende der abschmelzbaren Schweißdrahtelektrode, bis zum Kontakt oder Kurzschluss mit einer Oberfläche des Werkstückes benötigt und
Zünden des Schweißlichtbogens mit einer Zündenergie, welche in Abhängigkeit von der ermittelten Wegstrecke oder ermittelten Zeitdauer eingestellt wird.

Bei einer möglichen Ausführungsform des erfindungsgemäßen Verfahrens entsteht das freie Drahtende der abschmelzbaren Schweißdrahtelektrode durch Durchtrennung der Schweißdrahtelektrode an einer Schmelzstelle.

In einer weiteren möglichen Ausführungsform des erfindungsgemäßen Verfahrens wird die Durchtrennung der Schweißdrahtelektrode bewirkt, indem die Schweißdrahtelektrode mit einem hohen elektrischen Strom beaufschlagt wird und/oder die Drahtvorschubgeschwindigkeit reduziert bzw. sogar negativ wird.

In einer weiteren möglichen Ausführungsform des erfindungsgemäßen Verfahrens wird die Durchtrennung der Schweißdrahtelektrode durch Strombeaufschlagung und/oder durch Reduzierung der Drahtvorschubgeschwindigkeit bewirkt, sobald ein Kurzschluss zwischen der Schweißdrahtelektrode und dem Werkstück detektiert worden ist.

In einer weiteren möglichen Ausführungsform des erfindungsgemäßen Verfahrens wird die abschmelzbare Schweißdrahtelektrode mit einer Drahtfördergeschwindigkeit bei brennendem Schweißlichtbogen hin zu der Oberfläche des Werkstückes befördert.

In einer weiteren möglichenAusführungsform des erfindungsgemäßen Verfahrens wird während der Beförderung der Schweißdrahtelektrode ein Erlöschen des Schweißlichtbogens erkannt.

In einer weiteren möglichenAusführungsform des erfindungsgemäßen Verfahrens wird die Wegstrecke, welche das an der Schmelzstelle entstandene Drahtende der abschmelzbaren Schweißdrahtelektrode bis zum Kontakt oder Kurzschluss mit der Oberfläche des Werkstückes zurücklegt, in Abhängigkeit der Drahtfördergeschwindigkeit und/oder einer detektierten Zeitdifferenz ermittelt.

In einer weiteren möglichen Ausführungsform des erfindungsgemäßen Verfahrens wird die Wegstrecke, welche das an der Schmelzstelle entstandene Drahtende der abschmelzbaren Schweißdrahtelektrode bis zum Kontakt oder Kurzschluss mit der Oberfläche des Werkstückes zurücklegt, in Abhängigkeit einer Drahtförderbeschleunigung und einer detektierten Zeitdifferenz ermittelt.

In einer weiteren möglichen Ausführungsform des erfindungsgemäßen Verfahrens umfasst die detektierte Zeitdifferenz einen Zeitraum zwischen dem Zeitpunkt der Durchtrennung der abschmelzbaren Schweißdrahtelektrode und/oder des Erlöschens des Schweißlichtbogens und dem Zeitpunkt des Kontaktes oder Kurzschlusses des Drahtendes der abschmelzbaren Schweißdrahtelektrode mit der Oberfläche des Werkstückes.

In einer weiteren möglichen Ausführungsform des erfindungsgemäßen Verfahrens wird die Wegstrecke oder Zeitdauer, welche das Drahtende der abschmelzbaren Schweißdrahtelektrode bis zum Kontakt oder Kurzschluss mit der Oberfläche des Werkstückes benötigt, sensorisch gemessen.

In einer weiteren möglichen Ausführungsform des erfindungsgemäßen Verfahrens wird die Zündenergie zum Zünden und/oder Wiederzünden des Schweißlichtbogens mit ermittelter zunehmender Wegstrecke oder ermittelter zunehmender Zeitdauer automatisch höher als eine normale Zündenergie eingestellt.

In einer weiteren möglichen Ausführungsform des erfindungsgemäßen Verfahrens werden für verschiedene Wegstreckenwerte der Wegstrecke oder detektierte Zeitdifferenzwerte zugehörige Parametersätze für Schweißparameter aus einem Parametersatzspeicher ausgelesen und die Zündenergie zum Zünden und/oder Wiederzünden des Schweißlichtbogens entsprechend den ausgelesenen Parameterwerten der Schweißparameter eingestellt.

In einer weiteren möglichen Ausführungsform des erfindungsgemäßen Verfahrens weist der Parametersatz einen Zündstrom, I, eine Zündspannung, U,
und/oder eine Impulsfrequenz und/oder eine Drahtfördergeschwindigkeit, V_{D}, und/oder eine Drahtförderbeschleunigung, a_{D}, der abschmelzbaren Schweißdrahtelektrode während des Zündvorganges auf.

In einer weiteren möglichen Ausführungsform des erfindungsgemäßen Verfahrens umfasst der Schweißprozess eine Zündphase, eine Prozess-Startphase und eine Hauptprozessphase, wobei die Zündenergie der jeweils in den verschiedenen Phasen ausgeführten Zündvorgänge entsprechend dem erfindungsgemäßen Zündverfahren eingestellt wird.

In einer weiteren möglichen Ausführungsform des erfindungsgemäßen Verfahrens wird die Zündenergie zum Zünden und/oder Wiederzünden des Schweißlichtbogens in Abhängigkeit der ermittelten Wegstrecke oder ermittelten Zeitdauer automatisch entsprechend einer gespeicherten Kennlinie eingestellt.

In einer weiteren möglichen Ausführungsform des erfindungsgemäßen Verfahrens wird die Zündenergie zum Zünden und/oder Wiederzünden des Schweißlichtbogens in Abhängigkeit von der ermittelten Wegstrecke oder ermittelten Zeitdauer ermittelt bzw. berechnet.

In einer weiteren möglichen Ausführungsform des erfindungsgemäßen Verfahrens wird die Stromamplitude zur Durchtrennung der abschmelzbaren Schweißdrahtelektrode nach detektiertem Kurzschluss in Abhängigkeit eines Durchmessers der Schweißdrahtelektrode und/oder in Abhängigkeit eines elektrischen Leitwertes und der spezifischen Wärmekapazität der Schweißdrahtelektrode eingestellt.

Die Erfindung schafft ferner gemäß einem zweiten Aspekt eine Zündvorrichtung mit den in Patentanspruch 12 angegebenen Merkmalen.

Die Erfindung schafft demnach eine Zündvorrichtung zum Zünden und/oder Wiederzünden eines Schweißlichtbogens zwischen einem Drahtende einer abschmelzbaren Schweißdrahtelektrode und einem Werkstück mit
einer Ermittlungseinheit, welche geeignet ist, eine Wegstrecke oder Zeitdauer, die das freie Drahtende der abschmelzbaren Schweißdrahtelektrode bis zum Kontakt oder Kurzschluss oder Zünden des Schweißlichtbogens mit einer Oberfläche des Werkstückes benötigt, zu ermitteln und mit
einer Einstelleinheit, welche geeignet ist, eine Zündenergie zum Zünden und/oder Wiederzünden des Schweißlichtbogens in Abhängigkeit von der Wegstrecke oder Zeitdauer einzustellen.

Die Erfindung schafft ferner gemäß einem weiteren Aspekt ein Lichtbogenschweißgerät mit einer Zündvorrichtung gemäß dem zweiten Aspekt der Erfindung.

Im Weiteren werden mögliche Ausführungsformen des erfindungsgemäßen Verfahrens und der erfindungsgemäßen Zündvorrichtung unter Bezugnahme auf die beigefügten Figuren näher erläutert.

Es zeigen:
- Fig. 1: ein schematisches Ablaufdiagramm zur Darstellung eines Ausführungsbeispiels des erfindungsgemäßen Zündverfahrens;
- Fig. 2: ein Blockschaltbild einer möglichen Ausführungsform der erfindungsgemäßen Zündvorrichtung;
- Fig. 3: eine Skizze zur Erläuterung der Funktionsweise des erfindungsgemäßen Zündverfahrens;
- Fig. 4: eine weitere Skizze zur Erläuterung der Funktionsweise des erfindungsgemäßen Zündverfahrens.

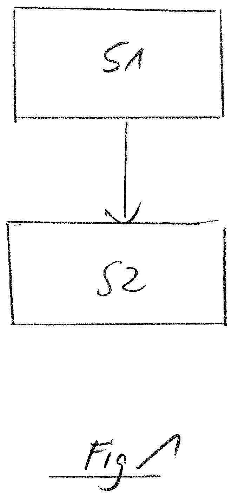

Das erfindungsgemäße Zündverfahren zum Zünden und/oder Wiederzünden eines Schweißlichtbogens SLB zwischen einem Drahtende einer abschmelzbaren Schweißdrahtelektrode SDE und einem Werkstück W weist im Wesentlichen zwei Hauptschritte auf, wie in Fig. 1 schematisch dargestellt.

Bei einem ersten Schritt S1 wird eine Wegstrecke S oder eine Zeitdauer, welche das Drahtende der abschmelzbaren Schweißdrahtelektrode SDE bis zu einem Kontakt oder bis zu einem Kurzschluss mit einer Oberfläche des Werkstückes W benötigt, ermittelt.

In einem weiteren Schritt S2 wird der Schweißlichtbogen SLB mit einer Zündenergie E_{Z} gezündet, welche in Abhängigkeit von der ermittelten Wegstrecke S oder der ermittelten Zeitdauer eingestellt wird. Das in Fig. 1 dargestellte Zündverfahren zum Zünden und/oder Wiederzünden des Schweißlichtbogens SLB berücksichtigt somit einen aktuellen thermischen Zustand des freien Endes der Schweißdrahtelektrode SDE. Hierdurch wird verhindert, dass das Schweißdrahtende zum Zünden des Schweißlichtbogens mit einer zu geringen oder einer zu hohen Zündenergie beaufschlagt wird. Es können hierdurch Lichtbogenabrisse verhindert werden. Weiter wird ein Schweißstartfehler beim Zünden des Schweißlichtbogens SLB vermieden.

Das Drahtende der abschmelzbaren Schweißdrahtelektrode SDE kann bei einer möglichen Ausführungsform durch Durchtrennung der Schweißdrahtelektrode an einer Schmelzstelle SS entstehen. Dieses Durchtrennen der Schweißdrahtelektrode SDE wird in einer möglichen Ausführungsform bewirkt, indem die Schweißdrahtelektrode mit einem hohen elektrischen Strom I beaufschlagt wird. Die Durchtrennung der Schweißdrahtelektrode SDE durch die Strombeaufschlagung erfolgt, sobald ein länger andauernder Kurzschluss bzw. Kontakt zwischen der Schweißdrahtelektrode SDE und dem Werkstück W detektiert worden ist.

Die Schweißdrahtelektrode SDE wird mit einer Drahtfördergeschwindigkeit V_{D} bei brennendem Schweißlichtbogen SLB hin zu der Oberfläche eines Werkstückes W befördert. Falls der Schweißlichtbogen SLB zur Beförderung der Schweißdrahtelektrode SDE erlöscht, kann dies in einer möglichen Ausführungsform detektiert werden.

In einer möglichen Ausführungsform wird die Wegstrecke S, welche ein an der Schmelzstelle SS entstandenes Drahtende der abschmelzbaren Schweißdrahtelektrode bis zum Kontakt oder Kurzschluss mit der Oberfläche des Werkstückes W zurücklegt, in Abhängigkeit der bekannten Drahtfördergeschwindigkeit V_{D} und einer detektierten Zeitdifferenz Δt ermittelt.

Die detektierte Zeitdifferenz umfasst bei einer möglichen Ausführungsform einen Zeitraum zwischen dem Zeitpunkt der Durchtrennung der abschmelzbaren Schweißdrahtelektrode SDE durch Strombeaufschlagung und dem Zeitpunkt des Kontaktes oder Kurzschlusses des Drahtendes der abschmelzbaren Schweißdrahtelektrode SDE mit einer Oberfläche des Werkstückes W oder dem Zeitpunkt des Zündens des Schweißlichtbogens.

Alternativ kann die detektierte Zeitdifferenz auch einen Zeitraum zwischen dem Zeitpunkt des detektierten Erlöschens des Schweißlichtbogens SLB und dem Zeitpunkt des Kontaktes oder Kurzschlusses des Drahtendes der abschmelzbaren Schweißdrahtelektrode SDE mit der Oberfläche des Werkstückes W umfassen oder dem Zeitpunkt des Zündens des Schweißlichtbogens.

Bei einer weiteren möglichen alternativen Ausführungsform des erfindungsgemäßen Verfahrens wird die Wegstrecke S oder die Zeitdauer, welche das Drahtende der abschmelzbaren Schweißdrahtelektrode SDE bis zum Kontakt oder Kurzschluss mit der Oberfläche des Werkstückes benötigt W, sensorisch gemessen.

Bei einer möglichen Ausführungsform des erfindungsgemäßen Verfahrens wird die Zündenergie E_{Z} zum Zünden oder Wiederzünden des Schweißlichtbogens SLB mit ermittelter zunehmender Wegstrecke oder ermittelter zunehmender Zeitdauer automatisch höher eingestellt.

In einer möglichen Ausführungsform werden bei dem in Fig. 1 dargestellten Verfahren die verschiedenen Wegstreckenwerte der Wegstrecke oder detektierten Zeitdifferenzwerte zugehörigen Parametersätze für Schweißparameter SP aus einem Parametersatzspeicher ausgelesen und die Zündenergie E_{Z} zum Zünden und/oder Wiederzünden des Schweißlichtbogens SLB entsprechend den ausgelesenen Parameterwerten der Schweißparameter SP eingestellt.

Ein Parametersatz kann dabei Parameter wie einen Zündstrom I, eine Zündspannung U, und/oder eine Impulsfrequenz und/oder eine Drahtfördergeschwindigkeit V_{D} und/oder eine Drahtförderbeschleunigung a_{D} der abschmelzbaren Schweißdrahtelektrode SDE während des Zündvorganges umfassen. Ebenfalls oder alternativ können Parameter wie eine Zündstromzeit und/oder Zündspannungszeit umfasst sein. Entsprechend werden die Parametersätze bzw. die Parameter gemäß dem eingestellten bzw. ausgewählten Schweißprozess (wie beispielsweise ein Kurzschlussschweißprozess oder ein Pulsschweißprozess) ausgewählt.

Die Zündenergie E_{Z} zum Zünden und/oder Wiederzünden des Schweißlichtbogens SLB wird bei einer möglichen Ausführungsform in Abhängigkeit der ermittelten Wegstrecke und/oder ermittelten Zeitdauer automatisch entsprechend einer gespeicherten Kennlinie eingestellt. Die Zündenergie E_{Z} zum Zünden und/oder Wiederzünden des Schweißlichtbogens SLB wird in einer möglichen Ausführungsform in Abhängigkeit von der ermittelten Wegstrecke und/oder ermittelten Zeitdauer von einer Recheneinheit berechnet. Dies erfolgt entsprechend angepasst an den ausgewählten Schweißprozess und an das Ereignis. Die Zündenergie kann dabei um bis zu 90% im Vergleich zu einer normalen Zündung variiert werden.

Bei einer möglichen Ausführungsform wird die Stromamplitude zur Durchtrennung der abschmelzbaren Schweißdrahtelektrode SDE oder bei einem detektierten Kurzschluss in Abhängigkeit eines Durchmessers der Schweißdrahtelektrode SDE eingestellt. Je höher der Durchmesser der Schweißdrahtelektrode SDE ist, desto höher ist die benötigte Stromamplitude zur Durchtrennung der abschmelzbaren Schweißdrahtelektrode SDE. Ferner kann die Stromamplitude zur Durchtrennung der abschmelzbaren Schweißdrahtelektrode SDE in Abhängigkeit des elektrischen Leitwertes und der spezifischen Wärmekapazität der Schweißdrahtelektrode SDE eingestellt werden.

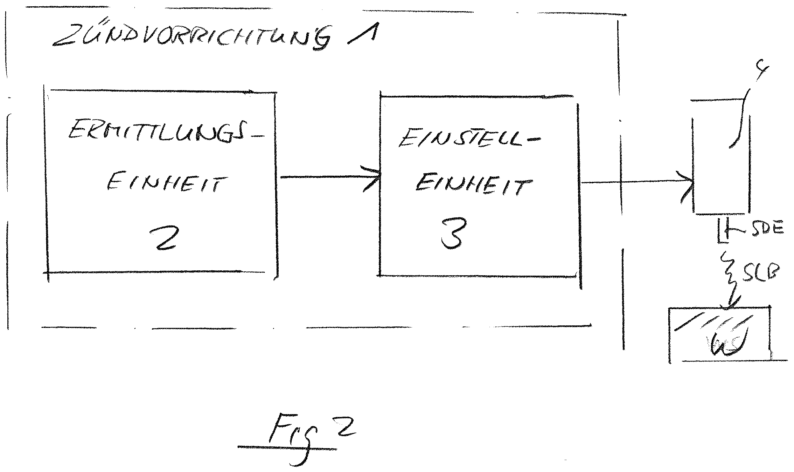

Fig. 2 zeigt ein Blockschaltbild einer möglichen Ausführungsform der erfindungsgemäßen Zündvorrichtung 1 gemäß einem weiteren Aspekt der Erfindung. Die in Fig. 2 dargestellte Zündvorrichtung 1 umfasst eine Ermittlungseinheit 2 und eine Einstellungseinheit 3. Die Zündvorrichtung 1 dient zum Zünden und/oder Wiederzünden eines Schweißlichtbogens SLB zwischen einem Drahtende einer abschmelzbaren Schweißdrahtelektrode SDE und einem Werkstück W, wie in Fig. 2 schematisch dargestellt. Die Schweißdrahtelektrode SDE befindet sich an einem Schweißbrenner 4 und kann von einer Spule abgespult und in Richtung auf das Werkstück W hin befördert werden. Dabei erfolgt die Beförderung der Schweißdrahtelektrode SDE bei einer möglichen Ausführungsform mit einer vorgegebenen bekannten Drahtfördergeschwindigkeit V_{D}. Die Ermittlungseinheit 2 der Zündvorrichtung 1 ist dazu ausgelegt, eine Wegstrecke S oder eine Zeitdauer, die das Drahtende der Schweißdrahtelektrode SDE bis zu einem Kontakt oder Kurzschluss mit der Oberfläche des Werkstückes W oder bis zur Zündung benötigt, zu ermitteln. In einer möglichen Ausführungsform wird die Wegstrecke S, die das Drahtende der abschmelzbaren Schweißdrahtelektrode SDE bis zum Kontakt mit der Oberfläche des Werkstückes W zurücklegt, in Abhängigkeit der bekannten Drahtfördergeschwindigkeit V_{D} der Schweißdrahtelektrode und einer detektierten Zeitdifferenz durch die Ermittlungseinheit 2 ermittelt. Alternativ kann die Wegstrecke S, welche das Drahtende der abschmelzbaren Schweißdrahtelektrode bis zum Kontakt oder Kurzschluss mit der Oberfläche des Werkstückes W oder Zündung zurücklegt, in Abhängigkeit einer bekannten Drahtförderbeschleunigung a_{D} und einer detektierten Zeitdifferenz Δt durch die Ermittlungseinheit 2 berechnet werden. Die detektierte Zeitdifferenz Δt umfasst bei einer möglichen Ausführungsform einen Zeitraum zwischen einem Zeitpunkt zur Durchtrennung der abschmelzbaren Schweißdrahtelektrode SDE durch Strombeaufschlagung und einem Zeitpunkt des Kontaktes oder Kurzschlusses des Drahtendes der abschmelzbaren Schweißdrahtelektrode SDE mit der Oberfläche des Werkstückes W oder einem Zeitpunkt der Zündung des Schweißlichtbogens SLB. Weiterhin kann die detektierte Zeitdifferenz Δt auch einen Zeitraum zwischen einem Zeitpunkt eines erkannten Erlöschens des Schweißlichtbogens SLB und einem Zeitpunkt des Kontaktes oder Kurzschlusses des Drahtendes der abschmelzbaren Schweißdrahtelektrode SDE mit der Oberfläche des Werkstückes W oder einem Zeitpunkt der Zündung des Schweißlichtbogens SLB umfassen.

In einer weiteren möglichen Ausführungsform der erfindungsgemäßen Zündvorrichtung 1 kann die Wegstrecke S oder eine Zeitdauer, welche das Drahtende der abschmelzbaren Schweißdrahtelektrode SDE bis zum Kontakt oder Kurzschluss mit der Oberfläche des Werkstückes W benötigt, sensorisch mit Hilfe von Sensoren gemessen und der Ermittlungseinheit 2 gemeldet werden. Bei dieser Ausführungsform verfügt die Zündvorrichtung 1 über einen Zeit- bzw. Taktgeber.

Die Einstelleinheit 3 der Zündvorrichtung 1 ist dazu ausgelegt, eine Zündenergie E_{Z} zum Zünden und/oder Wiederzünden des Schweißlichtbogens SLB in Abhängigkeit von der ermittelten Wegstrecke und/oder ermittelten Zeitdauer automatisch einzustellen. Die Zündenergie E_{Z} zum Zünden und/oder Wiederzünden des Schweißlichtbogens SLB wird in Abhängigkeit von der ermittelten Wegstrecke S oder Zeitdauer berechnet. Die Zündenergie zum Zünden und/oder Wiederzünden des Schweißlichtbogens SLB wird durch die Einstelleinheit 3 bei ermittelter zunehmender Wegstrecke und/oder ermittelter zunehmender Zeitdauer automatisch höher eingestellt. Je länger die Wegstrecke bzw. die benötigte Zeitdauer ist, desto mehr kühlt sich das Drahtende der abschmelzbaren Schweißdrahtelektrode SDE ab und desto mehr kalter Draht wird nachgeschoben, sodass eine höhere Zündenergie E_{Z} zum Zünden bzw. Wiederzünden der Schweißdrahtelektrode SDE benötigt wird.

Bei einer möglichen Ausführungsform wird für verschiedene Wegstreckenwerte der Wegstrecke S oder detektierte Zeitdifferenzwerte zugehörige Parametersätze für Schweißparameter SP in einem Parametersatzspeicher der Zündvorrichtung 1 gespeichert. Diese werden durch die Einstelleinheit 3 ausgelesen. Die Zündenergie E_{Z} zum Zünden und/oder Wiederzünden des Schweißlichtbogens wird durch die Einstelleinheit 3 entsprechend der ausgelesenen Parameterwerte der Schweißparameter SP eingestellt. Ein ausgelesener Parametersatz kann bei einer möglichen Ausführungsform einen Zündstrom I, eine Zündspannung U, eine Drahtfördergeschwindigkeit V_{D} und/oder Drahtförderbeschleunigung a_{D} für die abschmelzbare Schweißdrahtelektrode SDE während des Zündvorganges umfassen. Bei einem Impulslichtbogen kann der Parametersatz zusätzlich eine Impulsfrequenz umfassen. Bei einer weiteren möglichen Ausführungsform kann die Zündenergie E_{Z} zum Zünden und/oder Wiederzünden des Schweißlichtbogens durch die Einstelleinheit 3 in Abhängigkeit der ermittelten Wegstrecke S und/oder ermittelten Zeitdauer automatisch entsprechend einer gespeicherten Kennlinie eingestellt werden. Die in Fig. 2 dargestellte Zündvorrichtung 1 ist in einem Lichtbogenschweißgerät integriert, sodass ein Schweißprozess durchgeführt werden kann. Auf weitere erforderliche Komponenten des Lichtbogenschweißgeräts, die allgemein bekannt sind, wird hier nicht eingegangen.

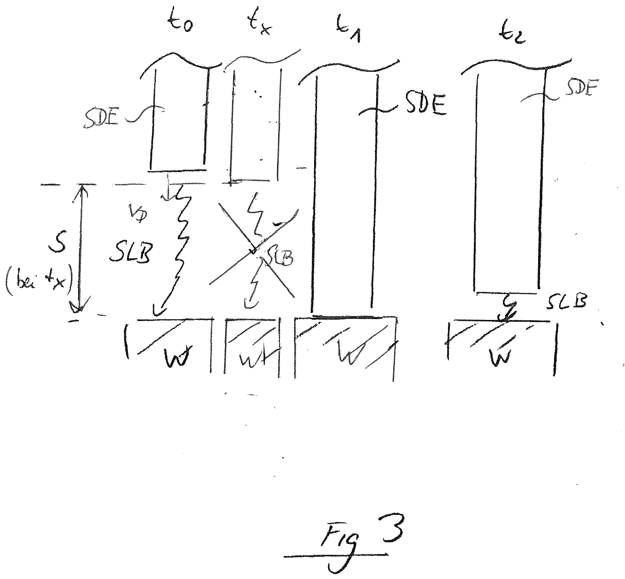

Fig. 3 skizziert schematisch die Funktionsweise der erfindungsgemäßen Zündvorrichtung 1. Zum Zeitpunkt t₀ wird eine Schweißdrahtelektrode SDE mit einer Drahtfördergeschwindigkeit V_{D} in Richtung hin auf eine Oberfläche eines Werkstückes W befördert. Zwischen dem freien Drahtende der Schweißdrahtelektrode SDE und der Oberfläche des Werkstückes W kann ein Schweißlichtbogen SLB bestehen. Zum Zeitpunkt tx erlöscht allerdings der SLB aufgrund einer Störung oder Ähnlichem. Das Erlöschen des SLB ist symbolisch durch ein "x" dargestellt. Mit diesem Ereignis wird die Wegmessung aktiviert. Zum Zeitpunkt t₁ berührt das Drahtende der Schweißdrahtelektrode SDE die Oberfläche des Werkstückes W. Durch die Berührung zündet der Schweißlichtbogen SLB. Die Berührung bzw. der Kontakt zum Zeitpunkt t₁ kann detektiert werden. Es kann dabei zu einem geringfügigen Materialübergang kommen. An der Spitze der Schweißdrahtelektrode SDE schmilzt etwas Material ab. Zum Zeitpunkt t₂ wird die Schweißdrahtelektrode SDE mit reduzierter Vorschubgeschwindigkeit V_{D} zu der Oberfläche des Werkstückes W bewegt, wobei ein Schweißlichtbogen SLB mit jener Zündenergie E_{Z} gezündet wird, die zumindest in Abhängigkeit der gemessenen Wegstrecke eingestellt wird, wie in Fig. 3 schematisch dargestellt. Bei einer alternativen Ausführungsform kann die Schweißdrahtelektrode SDE zum Zeitpunkt t₂ auch von der Oberfläche des Werkstückes W wegbewegt werden. Die eingestellte Zündenergie E_{Z} berücksichtigt den thermischen Zustand des Drahtendes der Schweißdrahtelektrode SDE zum Berührungszeitpunkt t₁. Je größer die zurückgelegte Wegstrecke S oder die hierfür erforderliche Zeitdauer Δt ist, desto mehr hat sich das Drahtende der Schweißdrahtelektrode SDE abgekühlt und/oder desto mehr kühler Draht wurde nachgeschoben und desto höher wird bei dem erfindungsgemäßen Verfahren und der erfindungsgemäßen Zündvorrichtung 1 die Zündenergie E_{Z} zum Zünden des Schweißlichtbogens eingestellt.

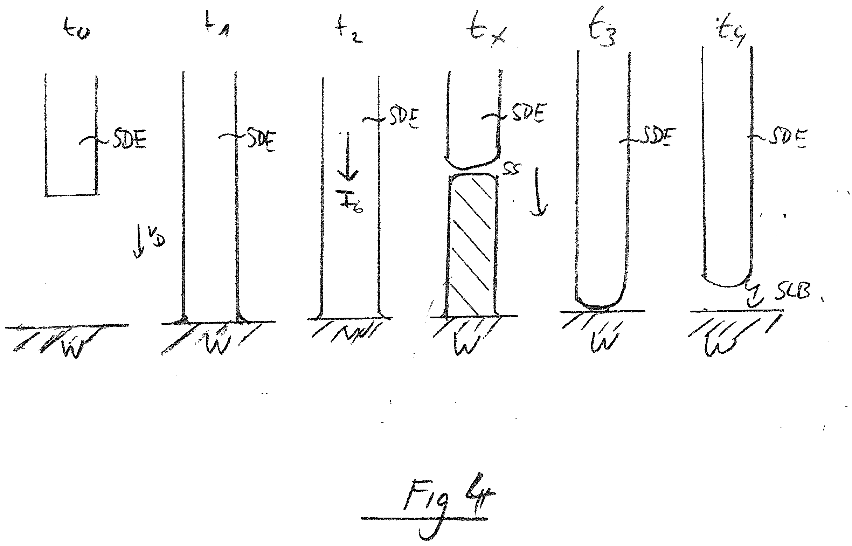

Fig. 4 skizziert eine Situation, in der während eines Startvorgangs des Schweißvorganges das Drahtende der Schweißdrahtelektrode SDE in Berührung bzw. Kontakt mit der Oberfläche des Werkstückes W anpickt bzw. verschweißt wird. Zum Zeitpunkt t₀ bewegt sich die Schweißdrahtelektrode SDE mit der bekannten Drahtfördergeschwindigkeit V_{D} in Richtung hin auf die Oberfläche des Werkstückes W zu, wobei ein Schweißlichtbogen SLB brennen kann; vor der ersten Zündung brennt zum Zeitpunkt t₀ noch kein Schweißlichtbogen SLB. Zum Zeitpunkt t₁ berührt das Schweißdrahtende der Schweißdrahtelektrode SDE die Oberfläche des Werkstückes W, wobei in diesem Falle ein Endstück der Schweißdrahtelektrode SDE an der Oberfläche des Werkstückes W ungewollt haften bleibt. Um dies aufzulösen wird die haftende Schweißdrahtelektrode SDE zum Zeitpunkt t₂ mit einem elektrischen Strom I_{b} mit hoher Stromamplitude beaufschlagt, um eine Durchtrennung der Schweißdrahtelektrode SDE herbeizuführen. Ferner kann zum Zeitpunkt t₂ die Drahtvorschubgeschwindigkeit V_{D} reduziert werden. Wie in Fig. 4 dargestellt, entsteht hierdurch zum Zeitpunkt tₓ bei einer Schmelzstelle SS ein neues Drahtende der abschmelzbaren Schweißdrahtelektrode SDE. Aufgrund des hohen Beaufschlagungsstromes I_{b} wird der untere abgetrennte Teil der Schweißdrahtelektrode SDE, in Fig. 4 zum Zeitpunkt tₓ schraffiert dargestellt, flüssig und kann wegspritzen. Dies wird als Ereignis erkannt und die Wegmessung wird gestartet/aktiviert. Ebenso wird nunmehr das neu gebildete Schweißdrahtende der Schweißdrahtelektrode SDE wieder mit einer Drahtfördergeschwindigkeit V_{D} hin in Richtung auf die Oberfläche des Werkstückes W gefördert. Das an der Schmelzstelle SS neu gebildete Drahtende der Schweißdrahtelektrode SDE berührt zu einem Zeitpunkt t₃ die Oberfläche des Werkstückes W, wie in Fig. 4 dargestellt. Durch die Berührung wird ein Schweißlichtbogen SLB zum Zeitpunkt t₄ gezündet. Das an der Schmelzstelle SS gebildete neue Schweißdrahtende kann bei einer möglichen Ausführungsform wieder von der Oberfläche des Werkstückes W zurückbewegt werden. In dem in Fig. 4 dargestellten Szenario ist das neu gebildete Drahtende der Schweißdrahtelektrode SDE an der Schmelzstelle SS aufgrund des hohen Beaufschlagungsstromes I_{b} stark erwärmt und ist somit deutlich wärmer als beispielsweise ein Drahtende einer Schweißdrahtelektrode zu Beginn eines Schweißvorganges. Diese zusätzliche Information wird vorzugsweise durch die Einstelleinheit 3 der Zündvorrichtung 1 zum Einstellen der Zündenergie E_{Z} zum Zeitpunkt t₃ berücksichtigt.

Wird infolge eines ungewollten Anhaftens (Ereignis) während eines Schweißprozesses der Schweißdrahtelektrode SDE an der Oberfläche des Werkstückes (Zeitpunkt t₁) die Schweißdrahtelektrode SDE mit einem hohen Strom I_{b} (t₂) zum Bilden einer Schmelzstelle SS beaufschlagt, kann die zum Zeitpunkt t₃ benötigte Zündenergie E_{Z} für den SLB bei t₄ entsprechend geringer eingestellt werden. Bei dieser Ausführungsform wird somit die Zündenergie E_{Z} vorzugsweise nicht nur in Abhängigkeit der ermittelten Wegstrecke S bzw. der dazu benötigen Zeitdauer eingestellt, sondern auch in Abhängigkeit der Amplitude des zum Zeitpunkt t₂ fließenden Durchtrennungsstromes I_{b}. Je höher die Stromamplitude des für das Schmelzen der Schweißdrahtelektrode SDE bereitgestellten Stromes I_{b} ist, desto geringer kann die Zündenergie E_{Z} zum Wiederzünden des Schweißlichtbogens SLB zum Zeitpunkt t₃ durch die Einstelleinheit 3 eingestellt werden. Bei einer möglichen Ausführungsform wird die in die Schweißdrahtelektrode SDE eingebrachte Wärme bzw. Energie ermittelt, insbesondere anhand der Schweißparameter und der bekannten Materialeigenschaften der Schweißdrahtelektrode SDE berechnet. Je höher die ermittelte Wärmeeinbringung ist, desto geringer wird die Zündenergie E_{Z} eingestellt.

In einem weiteren Szenario kann während des Schweißvorganges ein Abreißen (Ereignis) eines Schweißlichtbogens SLB detektiert werden. Die Zeit zwischen dem Abreißen des Schweißlichtbogens SLB und dem Kontakt bzw. der Berührung der Schweißdrahtelektrode SDE mit der Oberfläche des Werkstückes W kann gemessen bzw. erfasst werden. Je höher die erfasste Zeitdauer ist, desto mehr hat sich das Ende der Schweißdrahtelektrode SDE abgekühlt und desto höher wird die Zündenergie E_{Z} durch die Einstelleinheit 3 der Zündvorrichtung 1 eingestellt. Ein ungewolltes Festhaften der Schweißdrahtelektrode SDE am Werkstück W passiert bei herkömmlichen Schweißverfahren vor allem während des ersten Zündvorganges. Bei Lichtbogenabrissen kann in seltenen Fällen auch der Zustand eintreten, dass nach einem Zündfehler das Schweißdrahtende der Schweißdrahtelektrode SDE mit dem Werkstück W verschweißt ist bzw. anhaftet, wie in Fig. 4 schematisch dargestellt. Um den daraus entstandenen Kurzschluss aufzubrechen, wird die Schweißdrahtelektrode SDE bei dem erfindungsgemäßen Verfahren vorzugsweise mit einem Strom I_{b} mit hoher Stromstärke bestromt (Zeitpunkt t₂). Bei diesem Ablauf der Kurzschlussbehandlung kann die Schweißdrahtelektrode SDE an unterschiedlichen Positionen bzw. Schmelzstellen SS durchschmelzen. Nach Durchschmelzen der Schweißdrahtelektrode SDE wird die Schweißdrahtelektrode SDE nach vorne in Richtung hin zu der Oberfläche des Werkstückes W gefördert. Anschließend erfolgt eine neue Kontaktzündung zur Bildung eines Schweißlichtbogens SLB mithilfe der eingestellten Zündenergie E_{Z}.

Bei der erfindungsgemäßen Zündvorrichtung 1 wird ab dem Zeitpunkt des Durchschmelzens der Schweißdrahtelektrode SDE oder ab dem Zeitpunkt eines erkannten Lichtbogenabrisses bis zum Zeitpunkt der Wiederzündung die Wegstrecke S, welche die Schweißdrahtelektrode SDE zurücklegt und/oder die dafür benötigte Zeitdauer erfasst, und daraus die Position der Schmelzstelle bzw. des Lichtbogenabrisses abgeleitet. Es kann auch gesagt werden, dass der Weg bzw. die Zeit abhängig von einem Ereignis erfasst wird. Die ermittelte Wegstrecke S bzw. erfasste Zeitdifferenz ist repräsentativ an welcher Schmelzstelle die Schweißdrahtelektrode zum Zeitpunkt tₓ durchschmolzen worden ist. Daraus kann die benötigte optimale Zündenergie E_{Z} ermittelt bzw. berechnet werden. Wird beispielsweise die Schweißdrahtelektrode SDE direkt an einem Fußpunkt durchschmolzen (Fußpunkt = verschweißte Stelle mit dem Werkstück), kann die Zündenergie E_{Z} relativ gering eingestellt werden, da für den Aufbruch des Kurzschlusses ein hoher Kurzschlussstrom I_{b} verwendet wurde und somit das freie Drahtende bereits relativ stark vorgewärmt ist. Falls jedoch die Schweißdrahtelektrode SDE in Richtung des Kontaktrohres des Schweißbrenners 4 durchschmolzen ist, muss die Schweißdrahtelektrode SDE einen relativ langen Weg bzw. große Strecke S zurücklegen bis sie die Oberfläche des Werkstückes W erneut berührt, sodass für eine erneute Zündung eine erhöhte Zündleistung E_{Z} durch die Einstelleinheit 3 eingestellt wird. Die erhöhte Zündleistung E_{Z} ist erforderlich, da sich das Drahtende der nach vorne geförderten Schweißdrahtelektrode SDE während der Vorwärtsbewegung bereits abgekühlt hat und darüber hinaus kalter Draht nachgeschoben wird.

Aufgrund von einem Ereignis zum Zeitpunkt tₓ wird also der Schweißlichtbogen SLB mit einer Zündenergie entsprechend dem erfindungsgemäßen Verfahren gezündet. Nach der Zündung bzw. Wiederzündung kann bevorzugt eine Startphase durchgeführt werden, in welcher die Parameter ebenso in Abhängigkeit der zurückgelegten Wegstrecke angepasst werden. Beispielsweise wird der Drahtvorschub in der Startphase schneller (mit einer steileren Rampe) erhöht, wenn der Schweißlichtbogen SLB mit einer geringeren Zündenergie gezündet wurde - also der Schweißdraht stärker erwärmt war.

Nach der Startphase wird der eingestellte Schweißprozess durchgeführt.

Die erfindungsgemäße Zündvorrichtung 1 bietet eine drahtthermisch gesteuerte Lichtbogenzündung und berücksichtigt insbesondere einen aktuellen thermischen Zustand des Drahtendes einer Schweißdrahtelektrode SDE. Hierdurch kann die Zündenergie E_{Z} zum Zünden bzw. Wiederzünden des Schweißlichtbogens SLB optimal eingestellt werden. Demzufolge werden Lichtbogenabrisse oder Schweißstartfehler weitestgehend vermieden. Die Produktivität des Lichtbogenschweißgerätes wird entsprechend gesteigert.

### Liste Bezugszeichen

- 1: Zündvorrichtung
- 2: Ermittlungseinheit
- 3: Einstelleinheit
- 4: Schweißbrenner

## Patentansprüche

1. Verfahren zum Zünden und/oder Wiederzünden eines Schweißlichtbogens (SLB) zwischen einem Drahtende einer abschmelzbaren Schweißdrahtelektrode, SDE, und einem Werkstück (W) nach einem Ereignis mit den Schritten:
(a) Ermitteln (S1) einer Wegstrecke (S) oder Zeitdauer, welche das freie Drahtende der abschmelzbaren Schweißdrahtelektrode (SDE) bis zum Kontakt oder Kurzschluss mit einer Oberfläche des Werkstückes (W) oder bis zur Zündung des Schweißlichtbogens (SLB) benötigt; und
(b) Zünden (S2) des Schweißlichtbogens (SLB) mit einer Zündenergie, E_{z}, welche in Abhängigkeit von der ermittelten Wegstrecke (S) oder Zeitdauer eingestellt wird.

2. Verfahren nach Anspruch 1,
wobei die Wegstrecke (S), welche das an einer Schmelzstelle, SS, entstandene freie Drahtende der abschmelzbaren Schweißdrahtelektrode (SDE) bis zum Kontakt oder Kurzschluss mit der Oberfläche des Werkstückes (W) zurücklegt, in Abhängigkeit der Drahtfördergeschwindigkeit (V_{D}) und einer detektierten Zeitdifferenz, Δt, ermittelt wird.

3. Verfahren nach einem der vorangehenden Ansprüche 1 oder 2,
wobei die Wegstrecke (S), welche das an einer Schmelzstelle (SS) entstandene freie Drahtende der abschmelzbaren Schweißdrahtelektrode (SDE) bis zum Kontakt oder Kurzschluss mit der Oberfläche des Werkstückes (W) zurücklegt, in Abhängigkeit einer Drahtförderbeschleunigung, a_{D}, und einer detektierten Zeitdifferenz, Δt, ermittelt wird.

4. Verfahren nach Anspruch 2 oder 3,
wobei die detektierte Zeitdifferenz, Δt, einen Zeitraum zwischen dem Zeitpunkt, t_{D}, der Durchtrennung der abschmelzbaren Schweißdrahtelektrode (SDE) oder des Erlöschens des Schweißlichtbogens (SLB) und dem Zeitpunkt des Kontaktes oder Kurzschlusses, t_{K}, des freien Drahtendes der abschmelzbaren Schweißdrahtelektrode (SDE) mit der Oberfläche des Werkstückes (W) umfasst.

5. Verfahren nach einem der vorangehenden Ansprüche 1 bis 4,
wobei die Wegstrecke (S) oder Zeitdauer, welche das Drahtende der abschmelzbaren Schweißdrahtelektrode (SDE) bis zum Kontakt oder Kurzschluss mit der Oberfläche des Werkstückes (W) benötigt, sensorisch gemessen wird.

6. Verfahren nach einem der vorangehenden Ansprüche 1 bis 5,
wobei die Zündenergie, E_{Z}, zum Zünden und/oder Wiederzünden des Schweißlichtbogens (SLB) mit ermittelter zunehmender Wegstrecke (S) oder ermittelter zunehmender Zeitdauer automatisch höher eingestellt wird.

7. Verfahren nach einem der vorangehenden Ansprüche 1 bis 6,
wobei für verschiedene Wegstreckenwerte der Wegstrecke (S) oder detektierte Zeitdifferenzwerte zugehörige Parametersätze für Schweißparameter, SP, aus einem Parametersatzspeicher ausgelesen werden und die Zündenergie, E_{Z}, zum Zünden und/oder Wiederzünden des Schweißlichtbogens (SLB) entsprechend den ausgelesenen Parameterwerten der Schweißparameter, SP, eingestellt wird.

8. Verfahren nach Anspruch 7,
wobei der Parametersatz einen Zündstrom, I,
eine Zündspannung, U, und/oder
eine Impulsfrequenz und/oder eine Drahtfördergeschwindigkeit, V_{D}, und/oder einer Drahtvorschubbeschleunigung, a_{D}, der abschmelzbaren Schweißdrahtelektrode (SDE) während des Zündvorganges umfasst.

9. Verfahren nach einem der vorangehenden Ansprüche 1 bis 8,
wobei die Zündenergie, E_{Z}, zum Zünden und/oder Wiederzünden des Schweißlichtbogens (SLB) in Abhängigkeit der ermittelten Wegstrecke (S) oder ermittelten Zeitdauer automatisch entsprechend einer gespeicherten Kennlinie eingestellt wird.

10. Verfahren nach einem der vorangehenden Ansprüche 1 bis 9,
wobei die Zündenergie, E_{Z}, zum Zünden und/oder Wiederzünden des Schweißlichtbogens (SLB) in Abhängigkeit von der ermittelten Wegstrecke (S) oder Zeitdauer berechnet wird.

11. Verfahren nach einem der vorangehenden Ansprüche 2 bis 10,
wobei eine Stromamplitude zur Durchtrennung der abschmelzbaren Schweißdrahtelektrode (SDE) nach detektiertem Kurzschluss in Abhängigkeit eines Durchmessers der Schweißdrahtelektrode (SDE) des spezifischen Leitwertes und/oder der spezifischen Wärmekapazität der Schweißdrahtelektrode (SDE) eingestellt wird.

12. Zündvorrichtung (1) zum Zünden und/oder Wiederzünden eines Schweißlichtbogens (SLB) zwischen einem Drahtende einer abschmelzbaren Schweißdrahtelektrode (SDE) und einem Werkstück (W) mit:
- einer Ermittlungseinheit (2), welche geeignet ist, eine Wegstrecke (S) oder Zeitdauer, die das freie Drahtende der abschmelzbaren Schweißdrahtelektrode (SDE) bis zum Kontakt oder Kurzschluss mit einer Oberfläche des Werkstückes (W) oder bis zur Zündung des Schweißlichtbogens benötigt, zu ermitteln; und mit
- einer Einstelleinheit (3), welche geeignet ist, eine Zündenergie, E_{Z}, zum Zünden und/oder Wiederzünden des Schweißlichtbogens (SLB) in Abhängigkeit von der Wegstrecke (S) oder Zeitdauer einzustellen.

13. Lichtbogenschweißgerät mit einer Zündvorrichtung (1) nach Anspruch 12 und mit einem Schweißbrenner (4).
